# EUROPEAN PATENT APPLICATION

(11) **EP 2 733 010 A2**
(43) Date of publication of application: **21.05.2014**
(21) Application number: 13193633.8
(22) Date of filing: 20.11.2013
(51) Int. Cl.: B60L 11/18

(54) **A charge/discharge scheduling-operation system and a method thereof**

(30) Priority: 20.11.2012 JP 2012254356
(71) Applicant: Kabushiki Kaisha Toshiba, Tokyo 105-8001 (JP)
(72) Inventor: Aisu, Hideyuki, Tokyo, 105-8001 (JP)
(74) Representative: HOFFMANN EITLE

(57) **Abstract**

According to one embodiment, a system manages energy between a charge/discharge facility (118) positioned at each of points and electric vehicles (100) to travel among the points. The system includes an electric vehicle sign-in unit (111), a route information acquisition unit (111), and a facility usage scheduling unit (108). The electric vehicle sign-in unit (111) is configured to dynamically sign in and sign out an electric vehicle among the electric vehicles. The route information acquisition unit (111) is configured to acquire a route information representing a traveling schedule of the electric vehicle being signed in. The facility usage scheduling unit (108) is configured to generate a facility usage schedule representing a charge/discharge schedule of the charge/discharge facility at each point, by using the route information.

## Description

### FIELD

Embodiments described herein relate generally to a charge/discharge scheduling-operation system and a method thereof.

### BACKGROUND

In the future, in proportion to increase of electric vehicles of personnel user or for business, increase of electric vehicles which perform middle/quick charge outside the house or office is predicted. When an electric vehicle charges at a place where the driver has gone, a short time-charge such as middle/quick charge is mainly repeated while the electric vehicle is traveling. Accordingly, for example, among charge/discharge points limited such as SA/PA (rest areas in Japan, named Service Area and Parking Area) of an expressway, an office building or a factory of the client, charge/discharge of the large number of electric vehicles repeatedly occurs.

In the short time-charge such as middle/quick charge, the large number of energy is consumed for a moment. If the charge timing is not suitably operated, i.e., if the peak is not systematically shifted, demand-supply balance of energy in all local system is broken, and a facility of each charge/discharge point is greatly damaged. In addition, a planned charge service cannot be provided, and accident of the electric vehicle for lacking energy may be occurred. Accordingly, by reducing the peak when charge timing of the large number of electric vehicles concentrates to a specific point, a specific area, or a specific time segment, and simultaneously, by utilizing a stationary type-battery at the charge/discharge point, peak shift of the charge timing is necessary.

For example, in order for a local power supply system not to be unstable, a method for scheduling/controlling charge of each electric vehicle already connected to a charge facility (such as the building) is proposed. By this method, in order for each electric vehicle (as a single body) not to occur low battery while traveling, charge of the electric vehicle is controlled.

Furthermore, in order to minimize the number of charge cycles of electric vehicles utilized by delivery business, a method for determining assignment of vehicles and charge timing thereof is proposed. In these methods, each electric vehicle (to be operated) already connected to a charger is targeted, or a few electric vehicles specified for business are targeted.

Briefly, in above-mentioned methods, many and unspecified electric vehicles repeatedly traveling among rechargeable points are not targeted. Accordingly, as to load of electric vehicles, load of charge facilities of an entire area including points, and load of a charge facility of each point, suitable energy operation to simultaneously suppress these loads is difficult.

### SUMMARY

The present invention is directed to a system and a method for suitably managing energy between a charge/discharge facility at each of points and electric vehicles traveling among the points.

According to one embodiment, there is provided a system that manages energy between a charge/discharge facility positioned at each of points and electric vehicles to travel among the points. The system includes an electric vehicle sign-in unit, a route information acquisition unit, and a facility usage scheduling unit. The electric vehicle sign-in unit is configured to dynamically sign in and sign out an electric vehicle among the electric vehicles. The route information acquisition unit is configured to acquire a route information representing a traveling schedule of the electric vehicle being signed in. The facility usage scheduling unit is configured to generate a facility usage schedule representing a charge/discharge schedule of the charge/discharge facility at each point, by using the route information.

### BRIEF DESCRIPTION OF THE DRAWINGS

Fig.1 is a block diagram of a charge/discharge scheduling-operation system of an electric vehicle according to one embodiment.
Fig.2 is a flow chart of entire processing of the charge/discharge scheduling-operation system in Fig.1.
Fig.3 is a schematic diagram of one example of route information in case of an expressway.
Fig. 4 is a schematic diagram to explain rescheduling by fixing a part of a facility usage schedule notified to the electric vehicle.
Fig.5 is one example of a schedule notified to a charge/discharge facility.
Fig.6 is a schematic diagram to explain a scheduling method by heuristics similar to the leveling method.
Fig.7 is a flow chart of processing of scheduling-operation by a facility usage schedule update unit in Fig.1.
Fig.8 is a block diagram of hardware of the charge/discharge scheduling operation system in Fig.1.

### DETAILED DESCRIPTION

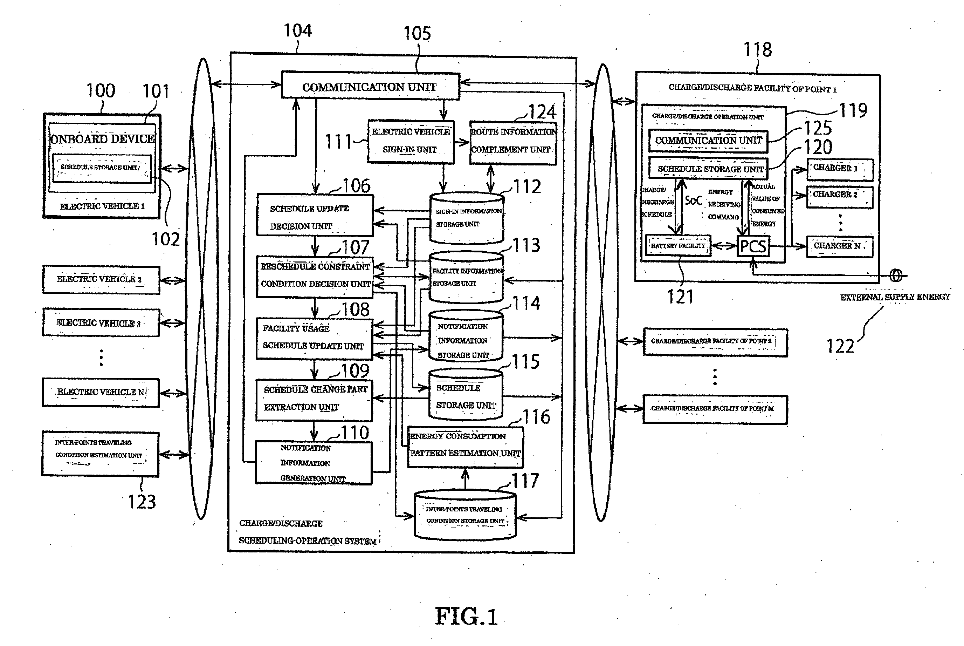

Fig.1 is a block diagram of a charge/discharge scheduling-operation system of an electric vehicle according to one embodiment.

In the charge/discharge scheduling-operation system, a plurality of electric vehicles possessed by many and unspecified users is targeted. Assume that the electric vehicles are traveling among a plurality of charge/discharge points (such as PA/SA, a charge stand, a parking lot, a convenience store, a building) in a target area. The electric vehicles and each facility of the charge/discharge points are targeted, and suitable operation of charge/discharge (energy operation) is realized. Here, the target area is an area where charge/discharge of electric vehicles and charge/discharge points are operated by the present system.

In order to reduce a peak when charge timing of many electric vehicles temporarily concentrates, the electric vehicle is not fully charged every time, but gradually and systematically charged at each charge/discharge point along a traveling route. Furthermore, if a facility of each charge/discharge point equips a large capacity battery as a buffer, this battery should be utilized at the maximum. By totally adding these factors, scheduling to operate charge of electric vehicle should be performed.

In the charge/discharge scheduling-operation system of the present embodiment, each charge facility for the electric vehicle at charge/discharge points in the target area, and the electric vehicles traveling among the charge/discharge points, are synchronously operated at the same time. As a result, suitable energy operation in the target area is performed. Owing to this, each electric vehicle (as an operation target) can dynamically sign in and sign out to the charge/discharge scheduling-operation system. By using route information of each electric vehicle being signed in, a facility usage schedule of charge/discharge facility at each charge/discharge point in a predetermined period (schedule time range) from the present time is generated, and a command based on the facility usage schedule is outputted to each charge/discharge facility. This operation is one specific feature. Here, dynamical sign-in represents that the electric vehicle going into the target area is signed in. Dynamical sign-out represents that the electric vehicle (already signed in) going out the target area is signed out.

Hereinafter, the charge/discharge scheduling-operation system will be explained.

The present system includes electric vehicles 1∼N (electric vehicle 100 as an example), a charge/discharge scheduling-operation system 104, and a charge/discharge facility of each point (charge/discharge facility of point 1 as an example) . The electric vehicles 1∼N are already signed in the system. The charge/discharge scheduling-operation system 104 is realized as a program and a storage unit on a server computer of an operation center. These can be mutually connected by an internet circuit or a privately used wireless circuit.

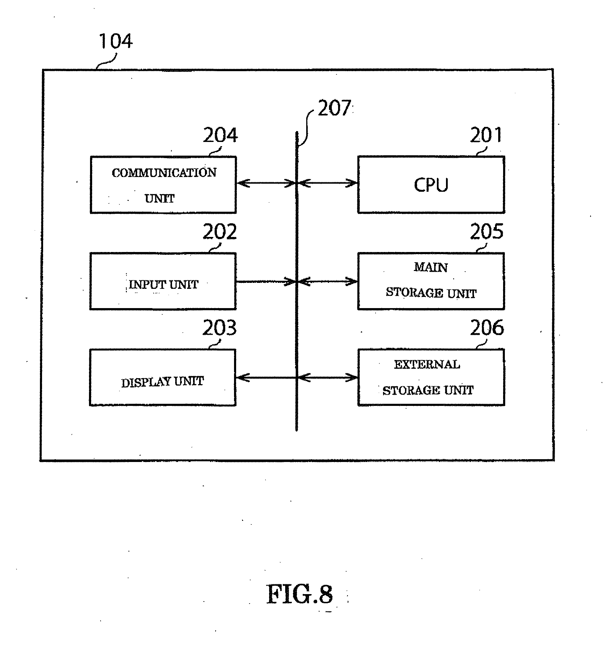

Fig.8 is hardware of the charge/discharge scheduling-operation system 104. This system 104 can be realized by using a computer device stored in the server computer as a basic hardware. As shown in Fig.8, the stored computer device includes a CPU 201, an input unit 202, a display unit 203, a communication unit 204, a main storage unit 205, and an external storage unit 206. These units are connected to be mutually communicable via a bus 207. The input unit 202 equips an input device such as a keyboard or a mouse, and outputs an operation signal (by operation from the input device) to the CPU 201. The display unit 203 includes a display such as a LCD (Liquid Crystal Display) or a CRT (Cathode Ray Tube). The communication unit 204 equips wireless or wired communication means, and performs communication with a specific communication method. The external storage unit 206 includes a storage medium such as a hard disk, a memory device, a CD-R, a CD-RW, a DVD-RAM, or a DVD-R. The external storage unit 206 stores a control program to make the CPU 201 execute processing of the present system 104. Furthermore, the external storage unit 206 stores data of each storage unit equipped by the present system. The main storage unit 205 extends control program (stored in the external storage unit 206) under control of the CPU 201, and stores data necessary to execute the control program and data generated by executing the control program. For example, the main storage unit 205 includes an arbitrary memory such as non-volatile memory. The control program may be realized by previously installing to the computer device. Alternatively, by storing the control program into the storage medium such as CD-ROM, or by distributing the control program via a network, this program may be arbitrarily installed to the computer device. Moreover, the input unit 202 and the display unit 203 may not be included.

The electric vehicle 100 equips an onboard device 101 for car navigation or ETC. The onboard device 101 includes a schedule storage unit 102 to store a facility usage schedule representing charge/discharge schedule of a charge/discharge facility at each charge/discharge point (notified by the charge/discharge scheduling-operation system 104). Here, not by notifying each electric vehicle of respective information, the schedule storage unit 102 may not be included. For example, the facility usage schedule (first facility usage schedule) of the electric vehicle includes a charge place, a charge start time, and a target charge energy of the electric vehicle in the future. Briefly, the facility usage schedule commands (indicates) charge/discharge points to be used by the electric vehicle, and a charge/discharge energy or a charge/discharge time at each point. Furthermore, as the charge/discharge point to be used, among a plurality of chargers equipped by charge/discharge facility at charge/discharge point, information to command a charger to be used may be included.

The charge/discharge facility 118 of point 1 is a controller to operate a facility such as a charge facility or a battery facility. The charge/discharge facility 118 of point 1 includes a charge/discharge operation unit 119, charge facilities (chargers 1∼N), a battery facility 121, a communication unit 125, a schedule storage unit 120, and an external supply energy 122 for charge. The schedule storage unit 120 stores a facility usage schedule notified by the charge/discharge scheduling-operation system 104. Moreover, the battery facility may not be included. The external supply energy 122 may be a power generation facility (such as solar power, gas turbine) possessed by the point, in addition to energy purchased from the power system. A facility usage schedule (second facility usage schedule) of the point includes an upper limit of charge/discharge energy or an upper limit of charge/discharge time for the electric vehicle which starts to charge in a predetermined time slot at the charge/discharge facility point. Furthermore, if the battery facility is equipped, a facility usage schedule (third facility usage schedule) of the point may include a target charge/discharge energy [kwh] of each time slot of each battery facility, or a target battery energy (stored energy of the battery facility) [kwh] of each time slot of each battery facility.

The charge/discharge scheduling-operation system 104 includes a communication unit 105, a schedule update decision unit 106, a reschedule constraint condition decision unit 107, a facility usage schedule update unit 108, a schedule change part extraction unit 109, a notification information generation unit 110, an electric vehicle sign-in unit 111, a sign-in information storage unit 112, a facility information storage unit 113, a notification information storage unit 114, a schedule storage unit 115, an energy consumption pattern estimation unit 116, an inter-points traveling condition storage unit 117, and a route information complement unit 124.

The communication unit 105 communicates information with each electric vehicle and the charge/discharge operation unit 119 equipped by the charge/discharge facility of each point.

The inter-points traveling condition storage unit 117 stores previously-defined information such as an estimation value (inter-points traveling time information) of traveling time between points, and an estimation value (inter-points traveling energy consumption information) of energy consumed during traveling between points.

The inter-points traveling time information is information that an averaged traveling time required for the electric vehicle to travel between points (travelable by the electric vehicle) is previously defined.

The inter-points traveling energy consumption information is information that an averaged consumption energy consumed for the electric vehicle to travel between points (travelable by the electric vehicle) is previously defined. The inter-points traveling energy consumption is changed by a type of the electric vehicle, traffic jam condition (averaged velocity) between points at scheduling time, weather, or temperature. Accordingly, respective energy consumptions between points at several cases may be previously stored.

These information stored in the inter-points traveling condition storage unit 117 may be arbitrarily changed by using information estimated by an inter-points traveling condition estimation unit 123 located outside. As the inter-points traveling condition estimation unit 123, for example, service provides of traffic jam information service may provide, or an operator of the present system may provide. As a means for estimating inter-points traveling condition, existing method can be used.

The electric vehicle sign-in unit 111 issues an ID to an electric vehicle which has newly signed in, and stores the ID into the sign-in information storage unit 112. The electric vehicle sign-in unit 111 may acquire proper profile information from the electric vehicle which has newly signed in, and store a set of the ID and the proper profile information into the sign-in information storage unit 112.

The proper profile information of the electric vehicle may include route information representing traveling schedule of the electric vehicle in a target area, such as schedule of passing or stopping at each point in the future. Moreover, the proper profile information may include information of vehicle type of the electric vehicle and the present location information. Furthermore, remained energy information of the battery at the present time may be included.

Furthermore, the electric vehicle sign-in unit 111 includes a route information acquisition unit to acquire route information of an electric vehicle which has newly signed in, from the electric vehicle. The electric vehicle sign-in unit 111 stores the route information into the sign-in information storage unit 112. If the route information is not perfect (For example, the information about a sign-in location only), the route information complement unit 124 may complement the route information. In this case, the route information complemented is stored in the sign-in information storage unit 112. Briefly, the route information complement unit 124 includes a route information estimation means to estimate route information from imperfect route information, and a route information obtaining unit to obtain route information estimated by the route information estimation means.

The sign-in information storage unit 112 stores information registered by the electric vehicle sign-in unit 111 and the route information complement unit 124. Furthermore, the sign-in information storage unit 112 may store vehicle type-profile information of electric vehicles able to be signed in the system. The vehicle type-profile information includes a type of usable charge facility (such as middle, quick, plug type), and basic information of mounted battery (rated charge capacity [kwh], normal charge energy [kwh]), based on a vehicle type of the electric vehicle. Furthermore, energy consumption rate information representing traveling distance per charge energy may be included.

The facility information storage unit 113 stores information of charge/discharge facility of each point. Here, this information includes the number of chargers (possessed by the charge/discharge facility) and a type of each charger (such as middle charge, quick charge), a basic specification (such as a standard rate [kw] of energy at charge/discharge time) of each charger, and basic information (such as a rated battery capacity [kwh], the stored battery energy [kwh], a lower limit [kwh] of the battery energy) of battery facility possessed by each charge/discharge facility. Furthermore, in a predetermined scheduled time range (For example, several hours ∼ one day) from the present time, an estimation value [kw] of the external supply energy at each time slot (For example, one hour), or information of a maximum [kw] and a minimum [kw] of the external supply power at each time slot, is included. Moreover, an estimation value [kwh] of supply energy, or information of a maximum [kwh] and a minimum [kwh] of energy able to be supplied, may be included.

The schedule update decision unit 106 decides whether to reschedule a facility usage schedule of each electric vehicle and each charge/discharge facility. For example, if an electric vehicle is newly signed in, the schedule update decision unit 106 determines to reschedule or not.

The reschedule constraint condition decision unit 107 determines a constraint condition when the facility usage schedule of each electric vehicle and each charge/discharge facility is rescheduled.

The energy consumption pattern estimation unit 116 generates an energy consumption pattern of the electric vehicle signed in, based on inter-points traveling time and inter-points traveling energy consumption stored in the inter-points traveling condition storage unit 117, and route information. The energy consumption pattern is information including energy consumption while traveling between points, and estimation times for the electric vehicle to pass/stop at each point. Accordingly, the energy consumption pattern includes the route information.

The facility usage schedule update unit 108 reschedules a facility usage schedule, and updates the facility usage schedule so as to maintain a constraint condition (determined by the reschedule constraint condition decision unit 107), a constraint of the energy consumption pattern of the electric vehicle, and a constraint of the charge/discharge facility at each point. Briefly, the facility usage schedule update unit 108 includes a facility usage scheduling means to generate a facility usage schedule of each charge/discharge facility of charge/discharge points, and a facility usage schedule of the electric vehicle.

The schedule change part extraction unit 109 extracts an electric vehicle and each point (charge/discharge facility) of which schedule contents are changed, as a notification target.

The notification information generation unit 110 generates a message (For example, the facility usage schedule updated) to be notified to each electric vehicle (notification target) and a charge/discharge operation unit 119 equipped by the charge/discharge facility 118 of each point, and notifies the message via the communication unit 105.

The notification information storage unit 114 stores information notified to each electric vehicle and the charge/discharge operation unit 119 equipped by the charge/discharge facility 118 of each point.

The schedule storage unit 115 stores the facility usage schedule updated by the facility usage schedule update unit 108.

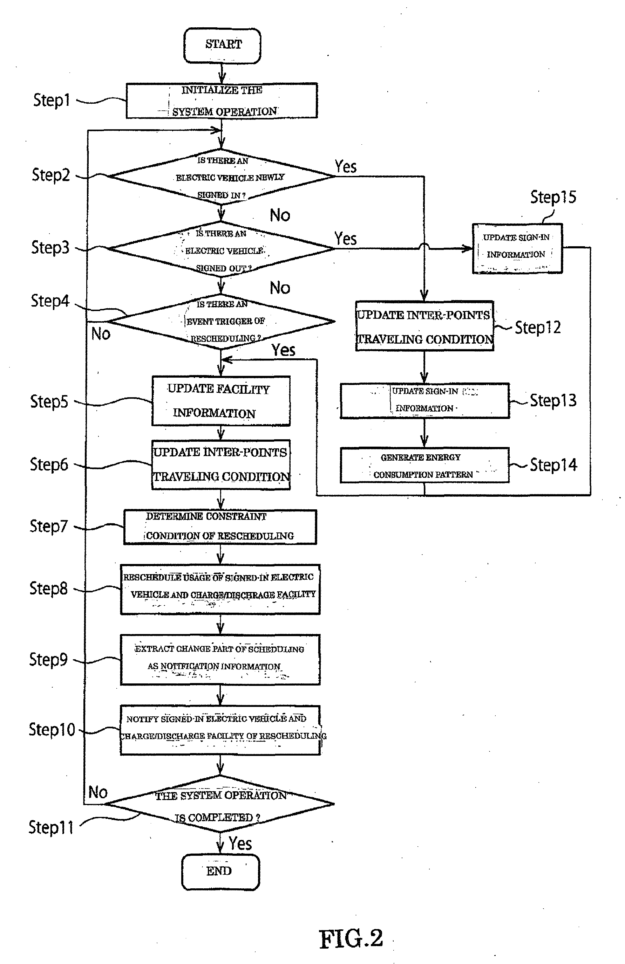

Next, outline of entire operation of the charge/discharge scheduling-operation system of the present embodiment will be explained by referring to Figs.1 and 2. Fig. 2 is a flow chart of processing of the charge/discharge scheduling-operation system.

First, at initial setting of the system (Step 1), in the present system, information of charge/discharge facility of each point is received from the charge/discharge operation unit 119 of each point via the communication unit 105, and this information is stored into the facility information storage unit 113. Furthermore, at the initial setting of the system (Step 1), vehicle type-profile information of electric vehicles able to sign in the system may be acquired from the outside, and stored into the sign-in information storage unit 112.

Next, if there is an electric vehicle newly signed in the charge/discharge scheduling-operation system (Yes at Step 2), processing is forwarded to Step 12. At Step 12, in the present system, when the inter-points traveling condition is changed, information stored in the inter-points traveling condition storage unit 117 is updated by using information presented by the inter-points traveling condition estimation unit 123. For example, when inter-points traveling time or inter-points traveling energy consumption is changed by unpredicted variation of traffic jam, weather or temperature, information stored in the inter-points traveling condition storage unit 117 is updated.

At Step 13, the electric vehicle sign-in unit 111 obtains proper profile information from the electric vehicle newly signed in via the communication unit 105, issues an ID, and stores a set of the ID and the proper profile information into the sign-in information storage unit 112 (Step 13). Moreover, only the ID may be issued and signed in without obtaining the proper profile information. If an electric vehicle does not have proper profile information thereof, vehicle type-profile information of the electric vehicle may be additionally acquired from the outside via network, and stored.

As a timing to sign in the charge/discharge scheduling-operation system, at a timing when the electric vehicle passes ETC gate or ITS spot in the target area, or at a timing when a new electric vehicle enters a specific monitoring area by detecting the location information with GPS. Alternatively, a driver may voluntarily sign in from the onboard device 101 or a cellular-phone to the charge/discharge scheduling-operation system. The profile information may be obtained at a timing when the electric vehicle is signed in the charge/discharge scheduling-operation system, or at a timing when the electric vehicle passes the pre-defined spot during being signed in.

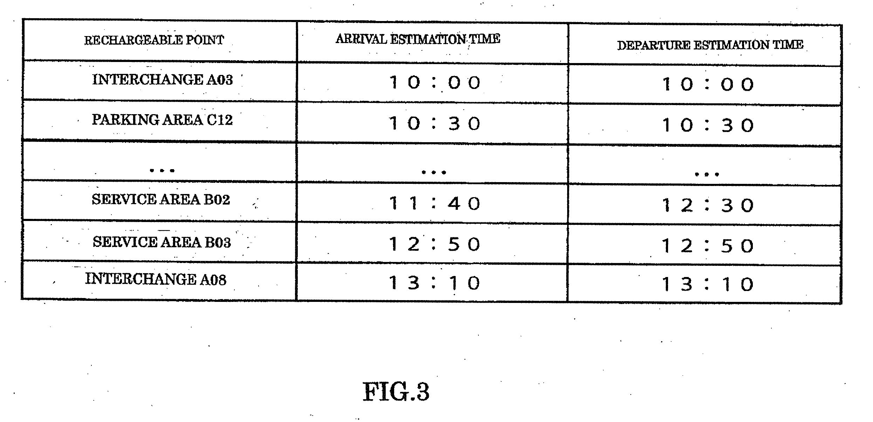

Here, Fig.3 shows one example of route information of electric vehicle on an expressway. In this example, an electric vehicle as a target is signed in the charge/discharge scheduling-operation system at a timing when the electric vehicle is entering the expressway from interchange A03 in the target area at 10:00. Then, the electric vehicle passes a parking area C12, stops at a service area B02 to take a rest "50 minutes", and passes a service area B03. Last, the electric vehicle is signed out the charge/discharge scheduling-operation system at a timing when the electric vehicle is going out the expressway from interchange A08 in the target area at 13:10. The route information may be acquired from path information of car navigation loaded to the onboard terminal of the electric vehicle. Alternatively, the driver may input the route information intensively.

However, the route information may be imperfect. In this case, the route information complement unit 124 can complement the route information. For example, if the route information is only traveling order of rechargeable points where the electric vehicle passes, arrival prediction time and departure prediction time are estimated by using inter-points traveling time stored in the inter-points traveling condition storage unit 117.

Furthermore, by using sign-in location and sign-out location (In Fig.3, interchanges A03 and A08) stored in the charge/discharge scheduling-operation system, the route information complement unit 124 may complement/add a rechargeable point where the electric vehicle passes on the way. If the expressway having a linear structured road is a target, traveling order of points between the sign-in location and the sign-out location is determined. If a plurality of traveling orders (each including via points on the way) is estimated, for example, a shortest path is selected from the traveling orders by using route map information, and estimated for the electric vehicle to travel.

Furthermore, except for sign-in location (In Fig.3, interchange A03) stored in the charge/discharge scheduling-operation system, it often happens that other locations are unknown at the sign-in timing. In this case, the route information complement unit 124 complements a sign-out location of the electric vehicle, and rechargeable points where the electric vehicle passes on the way. As a means to complement route, for example, a typical traveling path of the electric vehicle is previously set for each sign-in location.

Moreover, perfect route information can be acquired as a part of sign-in information from all electric vehicles. Accordingly, the route information complement unit 124 may be unnecessary.

At Step 14, the energy consumption pattern estimation unit 116 generates an energy consumption pattern of the electric vehicle newly signed in, by using inter-points traveling time and inter-points traveling energy consumption stored in the inter-points traveling condition storage unit 117.

Next, if there is an electric vehicle signed out the system, i.e., if there is an electric vehicle left from the system (Yes at Step 3), the electric vehicle sign-in unit 111 deletes information of this electric vehicle from the sign-in information storage unit 112 (Step 15) . In order to decide whether the electric vehicle leaves from the charge/discharge scheduling-operation system, it is detected that the electric vehicle passes ETC gate or ITS spot in the target area. Furthermore, by finding location of a new electric vehicle with GPS, it is detected that the new electric vehicle goes out from a specific monitoring area. When it is detected, the electric vehicle is automatically signed out, or after a predetermined time has elapsed from a sign-in time, the electric vehicle is automatically signed out. Furthermore, the driver may voluntarily perform sign-out from the onboard device 101 or a cellular-phone to the charge/discharge scheduling-operation system.

Next, the schedule update decision unit 106 decides whether to reschedule the facility usage schedule of each electric vehicle and each charge/discharge facility (Step 4). If rescheduling is unnecessary (No at Step 4), processing is returned to Step 2, and monitoring processing of the system is continued. If rescheduling is necessary (Yes at Step 4), processing is forwarded to Step 5. Here, in order to decide whether to reschedule the facility usage schedule, for example, following method for detecting occurrence of rescheduling event trigger can be used. However, the decision method is not limited to this method.
(1) A predetermined time has elapsed from a previous scheduling.
(2) By unpredicted variation of traffic jam, weather or temperature, the external system estimates that inter-points traveling energy consumption or arrival/departure time to each point in route information is largely changed.
(3) Following case is detected at any point of the charge/discharge facility side.
   A) A gap between an actual value of energy (or total energy) consumed by each charger and an estimation value (stored in the schedule storage unit 120) is larger than a first threshold. Alternatively, accumulated charge/discharge number is different from scheduled number.
   B) A gap between an actual value of external supply energy and an estimation value (stored in the schedule storage unit 120) is larger than a second threshold, and a gap between a prediction value of external supply energy in the future and the estimation value (stored in the schedule storage unit 120) is larger than the second threshold. For example, solar power generation is changed by suddenly-change of weather, or, by issuing a demand-response from an electric power company, an upper limit of supply energy from the system must be suppressed.
(4) The electric vehicle participating in the system (being signed in the system) changes proper profile information, and notifies this change voluntarily. For example, a route of the electric vehicle is changed while participating.

At Step 5, from information notified by the charge/discharge operation unit 119, when it is decided that information of charge/discharge facility of each point is changed, information stored in the facility information storage unit 113 is updated. For example, by suddenly-change of weather, solar power generation is changed. Alternatively, by issuing a demand-response from an electric power company, a prediction value [kw] of supply energy at each unit time slot or a maximum [kw] of external supply energy at each unit time slot is changed. In these cases, information stored in the facility information storage unit 113 is updated. Furthermore, information of stored battery energy of each battery facility at the present time is also changed.

At Step 6, the same processing as Step 12 is executed in case of necessity.

At Step 7, by referring to contents (stored in the notification information storage unit 114) notified to each electric vehicle, in order not to change the notified schedule as much as possible, the reschedule constraint condition decision unit 107 generates a constraint condition of next rescheduling by fixing a part of the notified schedule. Briefly, among electric vehicles being signed in the charge/discharge scheduling-operation system, if a facility usage schedule of charge/discharge facility to be used by an electric vehicle is notified to the electric vehicle at least one time, when the facility usage schedule is rescheduled to notify after the time, by setting contents of the facility usage schedule already notified to the electric vehicle as the constraint condition, the facility usage schedule is rescheduled. Alternatively, after a facility usage schedule is notified a predetermined times larger than or equal to two times, when the facility usage schedule is further rescheduled, preceding contents of the facility usage schedule notified may be the constraint condition.

For example, as to an electric vehicle to which the schedule is notified at least one time, a part of following conditions, or all following conditions, are fixed as the constraint condition.
(1) Charge/discharge points to be charged from the first time to the specific times:
(2) Start time to charge at the point:
(3) Target charge energy (or charge time) at the point:
(4) Scheduling within a predetermined time from schedule start time:

Specifically, if charge/discharge points to be charged from the first time to the specific times are set as the constraint condition, a facility usage schedule of the electric vehicle is rescheduled so as to satisfy conditions (charge point, start time to charge, target charge energy (or charge time)) of all charge/discharge points from the first time to the specific times. By fixing the charge point only, the start time to charge and the target charge energy (or the charge time) may be changeable.

If schedules within a predetermined time from the schedule start time are set as the constraint condition, without changing these schedules, a facility usage schedule of the electric vehicle is rescheduled.

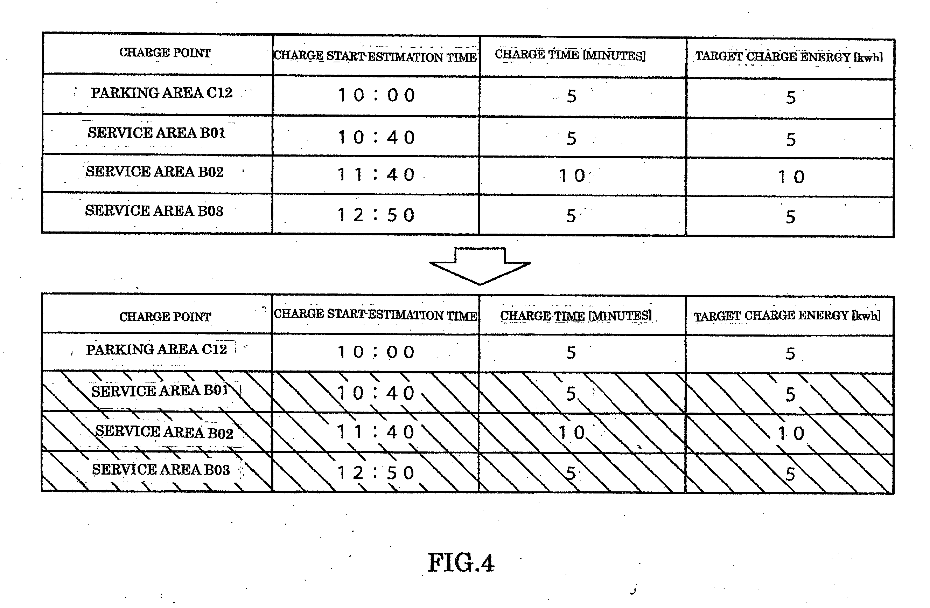

Fig.4 shows one example of a facility usage schedule to be notified to the electric vehicle and rescheduling of the facility usage schedule by fixing a part thereof. In this example, a schedule to separately charge four times (5 [kwh] at parking area C12, 5[kwh] at service area B01, 10[kwh] at service area B02, 5 [kwh] at service area B03) is initially notified. In this case, if the first time-charge is set as a constraint condition, charge at parking area C12 is the constraint condition of rescheduling, and other charge factors in the schedule may be changed for rescheduling. Furthermore, by setting charge/discharge point to be charged until the specific times as the constraint condition, the target charge energy and the start time may be changed.

Furthermore, as to a schedule already notified to the electric vehicle several times larger than a threshold, all of the schedule may be fixed.

Moreover, if the facility usage schedule is not notified to all electric vehicles being signed in, processing of Step 7 and the reschedule constraint condition decision unit 107 may be unnecessary.

Next, the facility usage schedule update unit 108 executes rescheduling so as to maintain each constraint (energy consumption pattern of each electric vehicle, constraint condition generated by the reschedule constraint condition decision unit 107, external supply energy (or upper limit thereof) at each time slot, constraint by each charge/discharge facility). Briefly, the facility usage schedule update unit 108 updates the facility usage schedule by rescheduling, and stores the updated facility usage schedule into the schedule storage unit 115.

The facility usage schedule is generated so that a facility usage schedule to be notified to each electric vehicle (being signed in) is not inconsistent with a facility usage schedule to be notified to each charge/discharge facility point under control of the system.

As a schedule to be notified to each electric vehicle, as shown in Fig.4, a charge point, a charge start time, and a target charge energy of each electric vehicle (being signed in) in the future, are determined. Briefly, as to each electric vehicle being signed in the charge/discharge operation system, a facility usage schedule commanding a charge/discharge point to be used by the electric vehicle, and charge/discharge energy or a charge/discharge time at each point, is generated.

Moreover, if there is an electric vehicle to which the facility usage schedule is not notified, or even if the facility usage schedule is not notified to all electric vehicles, in order to accurately generate a schedule to be notified to a charge facility of each point, the facility usage schedule update unit 108 updates the facility usage schedule of all electric vehicles signed in.

As a part of the facility usage schedule, a schedule to be notified to the charge/discharge facility of each point is generated as follows. If a battery facility is equipped, in a predetermined schedule time range (For example, several hours ∼ one day) from the present time, a target value [kwh] of charge/discharge energy of each battery facility at each time slot, or a target value [kwh] of a battery energy (stored energy in the battery facility) of each battery facility at each time slot, is determined.

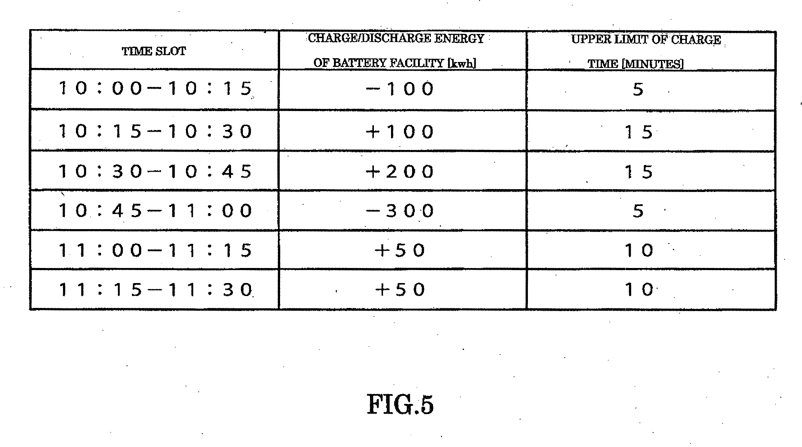

Furthermore, as to the charge/discharge facility of each point, when an electric vehicle starts charging at a charge/discharge facility point, the electric vehicle can schedule an upper limit of chargeable/dischargeable energy at the point or charge/discharge time at each time slot, and command to the charge/discharge facility. Fig. 5 shows one example of schedule to be notified to the charge/discharge facility point. For example, if an electric vehicle arrives at this point and starts charging in 10:30 ∼ 10:45, the electric vehicle can charge until fifteen minutes. However, if the electric vehicle starts charging in 10:45 ∼ 11:00, the electric vehicle can charge until five minutes only.

Next, at Step 9, the schedule change part extraction unit 109 extracts an electric vehicle of which schedule is changed as a notification target. At Step 10, the notification information generation unit 110 creates a message to be notified to each electric vehicle (the notification target) and the charge/discharge operation unit of each point, and notifies the message via the communication unit 105. Here, if the facility usage schedule is not notified to each electric vehicle, processing of Steps 9 and 10 is unnecessary. In this case, the schedule change part extraction unit 109 may be unnecessary.

Last, if a service by the charge/discharge scheduling-operation system is continued (No at Step 11), processing is returned to Step 2. In another case (Yes at Step 11), processing of this system is completed.

As a scheduling method by the facility usage schedule update unit 108, several conventional methods can be applied. For example, by discretizing a time and by formularizing as a network flow problem, this problem is solved as a mixed integer programming problem. Furthermore, a method by heuristics may be used.

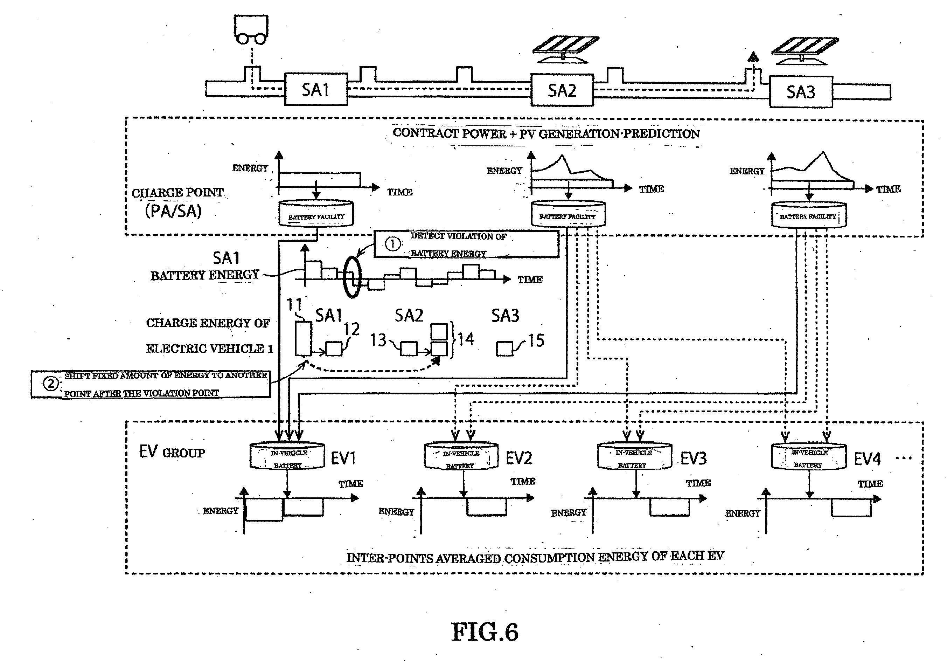

As an example, scheduling method by heuristics similar to leveling method used by large-scaled planning such as production planning, will be simply explained. Fig.6 shows an outline of a system thereof. Here, three charge/discharge points SA1, SA2, SA3, and four electric vehicles EV1, EV2, EV3, EV4, are already signed in. In Fig.6, a line connecting between each charge/discharge point and each electric vehicle represents that an electric vehicle passes a charge/discharge point connected to the electric vehicle by the line (EV1 is connected by a solid line, EV2∼EV4 are connected by a broken line). This connection relationship can be decided from route information. In this example, EV1 passes all of SA1, SA2 and SA3. However, EV2, EV3 and EV4 pass SA2 and SA3 only. These connection lines in Fig.6 are equivalent to linked data structures in internal data used by the facility usage schedule update unit 108 to operate scheduling.

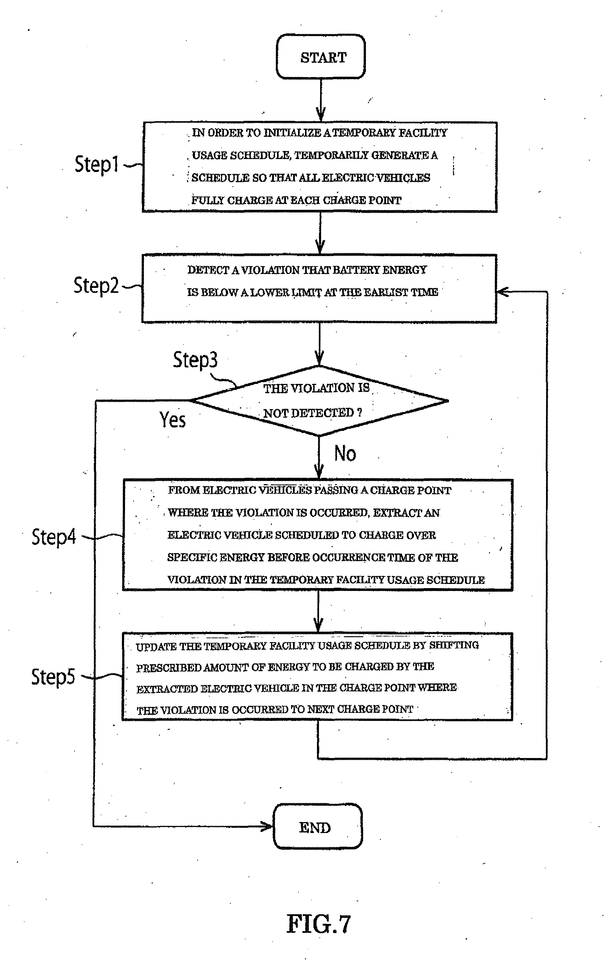

Next, flow of operation of scheduling will be simply explained by referring to Fig.7. In this system, by creating a temporary facility usage schedule and by repeating correction operation, constraint violation is canceled.

At Step 1, in order to initialize the temporary facility usage schedule, all electric vehicles temporarily create a schedule to fully charge at each charge/discharge point.

At Step 2, the facility usage schedule update unit 108 calculates battery energy of each battery facility at each time slot. Here, the battery energy is time-integrated in which a difference between an upper limit of supply energy and an energy consumed for charging at each time slot is integrated from initial battery energy. While battery energy violates the lower limit constraint, the facility usage schedule update unit 108 retrieves the earliest violation time slot from constraint violation time slots. For example, in Fig.6, at SA1, the constraint violation occurs at the first time. Moreover, if the battery energy of the battery facility is over than the upper limit, the supply energy is only reduced. Accordingly, this case is not regarded as the constraint violation.

If the constraint violation is not detected from each battery facility (Yes at Step 3), the scheduling is regarded as completion, and processing is completed.

If the constraint violation is detected (No at Step 3), at Step 4, from electric vehicles passing a charge/discharge point where the constraint violation of battery energy is occurred, electric vehicles scheduled to charge in that point over a specific energy before occurrence time of the constraint violation (in the temporary facility usage schedule) are extracted. For example, in Fig.6, EV1 is extracted.

Last, at Step 5, a prescribed amount of energy is subtracted from energy to be charged by the (extracted) electric vehicle, and this subtracted energy is shifted to another charge/discharge point where the (extracted) electric vehicle is scheduled to pass next to the charge/discharge point where the constraint violation is occurred. If the deleted energy is over a specific capacity of the mounted battery of the electric vehicle, an excess energy over the specific capacity is further shifted to a third charge/discharge point where the (extracted) electric vehicle is scheduled to pass next to the another charge/discharge point. As a result, the temporary facility usage schedule is updated. For example, in Fig.6, charge energy 11 of EV1 at SA1 is reduced to charge energy 12 by subtracting a part of the charge energy 11. By adding the deleted part to charge energy 13 at SA2, charge energy 13 of EV1 at SA2 is increased to charge energy 14. Moreover, charge energy at SA3 is shown as charge energy 15.

By repeating above-mentioned update processing, the facility usage schedule having no violations can be created finally.

As mentioned-above, according to the present embodiment, as to many and unspecified electric vehicles repeatedly traveling among rechargeable points, by simultaneously considering utility of each electric vehicle and load-suppression of a charge facility at each point (If a battery facility exists at the point, the battery facility is included in the charge facility), suitable energy operation can be realized. Furthermore, by considering load-suppression of charge facilities in entire area including a plurality of points, the energy operation can be realized.

While certain embodiments have been described, these embodiments have been presented by way of examples only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A system for managing energy between a charge/discharge facility (118) positioned at each of points and electric vehicles (100) to travel among the points, **characterized by**
an electric vehicle sign-in unit (111) configured to dynamically sign in and sign out an electric vehicle among the electric vehicles;
a route information acquisition unit (111) configured to acquire a route information representing a traveling schedule of the electric vehicle being signed in; and
a facility usage scheduling unit (108) configured to generate a facility usage schedule representing a charge/discharge schedule of the charge/discharge facility at each point, by using the route information.

2. The system according to claim 1, wherein
the facility usage scheduling unit (108) generates a first facility usage schedule including points for the signed-in electric vehicles to charge, and a charge/discharge energy or a charge/discharge time of the charge/discharge facility at the points, by using estimation values of a traveling time of the electric vehicle among the points and estimation values of energy consumed by the electric vehicle's traveling.

3. The system according to claim 2, further comprising:
a notification unit (110) configured to notify the first facility usage schedule to the signed-in electric vehicles.

4. The system according to claim 1, wherein
the facility usage scheduling unit (108) generates a second facility usage schedule including upper limits of chargeable energy, upper limits of chargeable power, or upper limits of a charge time for the signed-in electric vehicles at the charge/discharge facility.

5. The system according to claim 1, wherein
the charge/discharge facility (118) at a part or all of the points includes a battery facility, and
the facility usage scheduling unit (108) generates a third facility usage schedule including target values of charge/discharge energy or target values of stored battery energy of the battery facility at each time slot.

6. The system according to claim 4, further comprising:
a notification unit (110) configured to notify the charge/discharge facility of the second facility usage schedule.

7. The system according to claim 1, wherein
the route information acquisition unit (111) acquires the route information at a timing when the electric vehicle sign-in unit signs in the electric vehicle or a timing when the signed-in electric vehicle passes pre-defined specific spots.

8. The system according to claim 1, further comprising:
a route information estimation unit (124) configured to estimate the route information of the electric vehicle, based on a location where the electric vehicle is signed in;
the route information acquisition unit (111) acquires the route information estimated by the route information estimation unit.

9. The system according to claim 3, wherein
the facility usage scheduling unit (108) reschedules the facility usage schedule by setting a part or all of the facility usage schedule as a constraint condition, after the notification unit notifies the electric vehicle of the facility usage schedule.

10. A method for managing energy between a charge/discharge facility (118) positioned at each of points and electric vehicles (100) to travel among the points, **characterized by**
dynamically executing sign-in and sign-out of an electric vehicle among the electric vehicles;
acquiring a route information representing a traveling schedule of the electric vehicle being signed in; and
generating a facility usage schedule representing a charge/discharge schedule of the charge/discharge facility at each point, by using the route information.
